# EUROPÄISCHE PATENTSCHRIFT

(11) **EP 3 533 713 B1**
(45) Veröffentlichungstag und Bekanntmachung des Hinweises auf die Patenterteilung: **09.08.2023**
(21) Anmeldenummer: 18159198.3
(22) Anmeldetag: 28.02.2018
(51) Int. Cl.: B64D 45/00

(54) **UNIVERSELLER FLUGDATENSCHREIBER UND MODULARES BEFESTIGUNGSSYSTEM**
UNIVERSAL FLIGHT DATA RECORDER AND MODULAR MOUNTING SYSTEM
ENREGISTREUR DE DONNÉES DE VOL ET SYSTÈME DE FIXATION MODULAIRE

(43) Veröffentlichungstag der Anmeldung: 04.09.2019
(73) Patentinhaber: HENSOLDT Sensors GmbH, 82024 Taufkirchen (DE)
(72) Erfinder: Stehle, Nikolaus, 88048 Friedrichshafen (DE); Biell, Mark, 88048 Friedrichshafen (DE); Würker, Sven, 78357 Mühlingen (DE); Breunig, Markus, 88138 Weißensberg (DE)
(74) Vertreter: LifeTech IP Spies & Behrndt Patentanwälte PartG mbB

(56) Entgegenhaltungen:
- WO-A1-2011/010942
- FR-A1- 2 983 833
- US-A1- 2011 060 498
- US-A1- 2014 277 923
- US-B1- 8 670 879

## Beschreibung

Die vorliegende Erfindung bezieht sich auf einen universellen Flugdatenschreiber, ein modulares Befestigungssystem zur Befestigung des universellen Flugdatenschreibers als auch auf ein Verfahren zum Einbau eines Flugdatenschreibers in ein Luftfahrzeug. Insbesondere bezieht sich die vorliegende Erfindung auf ein modulares System eines abwerfbaren Flugdatenschreibers.

### Hintergrund

Sowohl in der zivilen als auch in der militärischen Luftfahrt ist es wichtig, Flug- und Kommunikationsdaten fortlaufend aufzuzeichnen, um bei einem möglichen Störfall die Ursachen genau analysieren zu können. Ein hierzu genutzter Flugdatenschreiber kann aber auch für eine fortlaufende Überwachungen und Aufzeichnungen wichtiger Flugzeugdaten genutzt werden, die dann bei Bedarf (z.B. bei einer Wartung) ausgelesen werden.

US 2014/277923 A1 offenbart einen bekannten Flugdatenschreiber, der über eine Scharnierverbindung und über eine Arretierung mit dem Flugzeug verbunden ist. US 2011/060498 offenbart eine auswertbaren Datenaufzeichnungsvorrichtung, wobei das Gehäuse ein Befestigungsloch für ein zerbrechliches Befestigungselement aufweist und eine Abdeckplatte mittels der Befestigungselemente an dem Flugzeug befestigt wird. FR 2 983 833 offenbart einen weiteren bekannten Flugdatenschreiber mit einem wasserdichten Gehäuse, der in einer Ausnehmung in einer Sperr- oder Verriegelungsposition montiert ist. US 8,670,879 B1 und WO 2011/010942 A1 offenbaren weitere automatisch abwerfbare Flugdatenschreiber.

Es kommt immer wieder vor, dass das Auslesen der Daten aus dem Flugdatenschreiber nach einem Absturz und/oder nach einer Kollision nur unter erheblichem Aufwand oder gar nicht mehr möglich ist. Ein weiteres Problem umfasst die aufwendige Herstellung der abwerfbaren Flugdatenschreiber, die häufig spezifisch für jeden Flugzeugtyp hergestellt oder unter Nutzung verschiedenster Befestigungssysteme montiert werden.

Daher besteht ein Bedarf nach neuen Konzepten, um Flugdatenschreiber in kommerziellen und militärisch genutzten Luftfahrzeugen zu integrieren, die die obengenannten Mängel überwinden. Insbesondere besteht ein Bedarf, einen universellen Flugdatenschreiber für verschiedene Flugzeugtypen zu nutzen, der sich leicht installieren lässt.

### Zusammenfassung

Zumindest ein Teil der oben genannten Probleme wird durch einen universellen Flugdatenschreiber nach Anspruch 1, ein Luftfahrzeug oder Teile davon nach Anspruch 7 und Anspruch 8 und ein Verfahren nach Anspruch 9 gelöst. Die abhängigen Ansprüche beziehen sich auf weitere vorteilhafte Ausgestaltungen der genannten Gegenstände.

Die vorliegende Erfindung bezieht sich auf einen universellen Flugdatenschreiber eines Luftfahrzeuges. Der Flugdatenschreiber ist für mehrere Typen von Luftfahrzeugen (universell) nutzbar. Der Flugdatenschreiber umfasst Befestigungsmittel, um den Flugdatenschreiber in einer dafür vorgesehenen Ausnehmung des Luftfahrzeuges zu befestigen. Der Flugdatenschreiber umfasst außerdem Verbindungsmittel zur Befestigung einer Abdeckung, die nach dem Befestigen des Flugdatenschreibers in der Ausnehmung Teil einer Außenoberfläche des Luftfahrzeuges ist.

Optional ist innerhalb der Ausnehmung des Luftfahrzeuges eine Einpunktaufhängung vorgesehen und die Befestigungsmittel sind ausgebildet, um die Einpunktaufhängung beim Einsetzen des Flugdatenschreibers in Eingriff zu nehmen, um den Flugdatenschreiber daran zu halten. Optional sind ebenfalls Mehrpunktaufhängungen möglich. Die Erfindung soll nicht auf eine spezifische Befestigung eingeschränkt werden.

Der Flugdatenschreiber umfasst eine Abdeckung, die spezifisch für das Luftfahrzeug ist und auf einer Seite eine Außenlackierung des Luftfahrzeuges aufweist, und ein Gehäuse, das die Verbindungsmittel aufweist, um daran die Abdeckung zu befestigen. Die Befestigung geschieht in Form von lösbaren Verbindungen (z.B. eine Schraub- oder Klemmverbindung umfassend). Auf einer gegenüberliegenden Seite weist die Abdeckung eine Außenlackierung des Luftfahrzeuges auf.

Optional umfasst das Gehäuse die Befestigungsmittel und die beispielhafte Einpunktaufhängung umfasst ein stabförmiges Befestigungselement. Die Befestigungsmittel können außerdem einen drehbaren Arretiermechanismus aufweisen, der im eingebauten Zustand der Abdeckung zugewandt und ausgebildet ist, um über eine Drehung eine Verbindung mit dem stabförmigen Befestigungselement herzustellen bzw. diese zu lösen, um so das Gehäuse in der Ausnehmung zu halten oder zu lösen. Die Befestigungsmittel können beispielsweise ausgebildet sein, um einen zylinderförmigen Befestigungsbolzen als stabförmiges Befestigungselement in Eingriff zu nehmen, um den Flugdatenschreiber mit dem Luftfahrzeug zu verbinden. Auf diese Weise wird es möglich, von einer Außenseite des Luftfahrzeuges den Flugdatenschreiber zu befestigen oder zu lösen.

Optional umfasst der Flugdatenschreiber einen Abwerfmechanismus, insbesondere eine Treibladung, um einen Abwurf des Flugdatenschreibers zu ermöglichen.

Optional kann der Flugdatenschreiber auch in ein Gehäuse eingebracht werden, wobei das Gehäuse die Öffnung für das stabförmige Befestigungselement aufweist. Das stabförmige Befestigungselement kann beim Fixieren zumindest teilweise in/durch die Öffnung hindurch geführt werden.

Die vorliegende Erfindung bezieht sich auch auf ein modulares Befestigungssystem für einen Flugdatenschreiber in einer Ausnehmung eines Luftfahrzeugs. Das modulare Befestigungssystem umfasst einen zuvor beschriebenen universellen Flugdatenschreiber.

Optional umfasst das Befestigungssystem weiter eine Kammer, die die Ausnehmung an einer Außenoberfläche eines Luftfahrzeuges bildet, und eine Befestigungsstruktur, die ausgebildet ist, um die Befestigungsmittel des Flugdatenschreibers in Eingriff zu nehmen, um den Flugdatenschreiber zu halten. Die Kammer kann beispielsweise schalenförmig ausgebildet sein, um die Ausnehmung zu definieren, die durch die Abdeckung verschließbar ist.

Optional definiert die Befestigungsstruktur eine Einpunktaufhängung und umfasst insbesondere ein zentral angeordnetes stabförmiges Befestigungselement, um den Flugdatenschreiber mittels der Einpunktaufhängung zu halten. Die Befestigungsmittel des Flugdatenschreibers sind somit an einer zentralen Position fest mit dem Luftfahrzeug verbindbar. Nach dem Einsetzen des Flugdatenschreibers in die Ausnehmung soll ein unbeabsichtigtes Lösen des Flugdatenschreibers verhindert werden.

Die vorliegende Erfindung bezieht sich auch auf ein Ruderteil oder ein Rumpfteil eines Flugzeuges oder eines anderen Luftfahrzeuges mit einem der zuvor beschriebenen Befestigungssysteme.

Die vorliegende Erfindung bezieht sich auch auf ein Luftfahrzeug (insbesondere ein Flugzeug) mit einem zuvor beschriebenen Befestigungssystem.

Die vorliegende Erfindung bezieht sich auch auf ein Verfahren zum Einbau eines Flugdatenschreibers in ein Luftfahrzeug, nach Anspruch 9.

Ausführungsbeispiele lösen somit zumindest einen Teil der oben genannten Probleme durch einen universellen Flugdatenschreiber, der ausgebildet ist, in einer Ausnehmung oder einer Kammer eines Flugzeuges befestigt zu werden. Innerhalb der Kammer kann insbesondere ein stabförmiges Befestigungselement für eine Einpunktaufhängung vorhanden sein, das mit Befestigungsmitteln des Flugdatenschreibers arretierbar ist, so dass der Flugdatenschreiber nach dem Einsetzen zusammen mit dem Flugdatenschreiber fest mit dem Flugzeug verbunden und kein unbeabsichtigtes Lösen möglich ist.

Ein weiterer Vorteil von Ausführungsbeispielen besteht in der beispielhaft mittig angeordneten Befestigungsstruktur, die es ermöglicht, dass der Flugdatenschreiber unabhängig von der Einbauposition bzw. des Luftstromes ausgestoßen werden kann.

Für den Ausstoß bedarf es keines Luftstromes des Flugzeuges. Stattdessen kann eine Absprengladung vorgesehen sein, die den Flugdatenschreiber zusammen mit dem Flugdatenschreiben auswirft. Daher kann der Flugdatenschreiber insbesondere für einen abwerfbaren Flugdatenschreiber in einer Kammer an der Außenwand des Flugzeuges genutzt werden und diesen an einer beliebigen Stelle sicher halten. Ausführungsbeispiele erreichen somit eine weitestgehende Flexibilität bei der Integration eines abwerfbaren Flugdatenschreibers in einem kommerziell oder einem militärisch genutzten Luftfahrzeug.

### Kurzbeschreibung der Figuren

Die Ausführungsbeispiele der vorliegenden Erfindung werden besser verstanden von der folgenden detaillierten Beschreibung und den beiliegenden Zeichnungen, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt ein Befestigungssystem für einen Flugdatenschreiber nach einem Ausführungsbeispiel der vorliegenden Erfindung.
- Fig. 2: zeigt mögliche Platzierungen des Flugdatenschreibers an einer Außenwand eines beispielhaften Flugzeuges gemäß weiterer Ausführungsbeispiele.
- Fig. 3: zeigt den erfindungsgemäßen Flugdatenschreiber nach dem Einbau in eine Kammer des beispielhaften Flugzeuges.
- Fig. 4: zeigt eine Draufsicht auf eine Außenfläche des beispielhalften Flugzeuges mit eingesetztem Flugdatenschreiber vor und nach dem Verschluss mit einer Abdeckung.

### Detaillierte Beschreibung

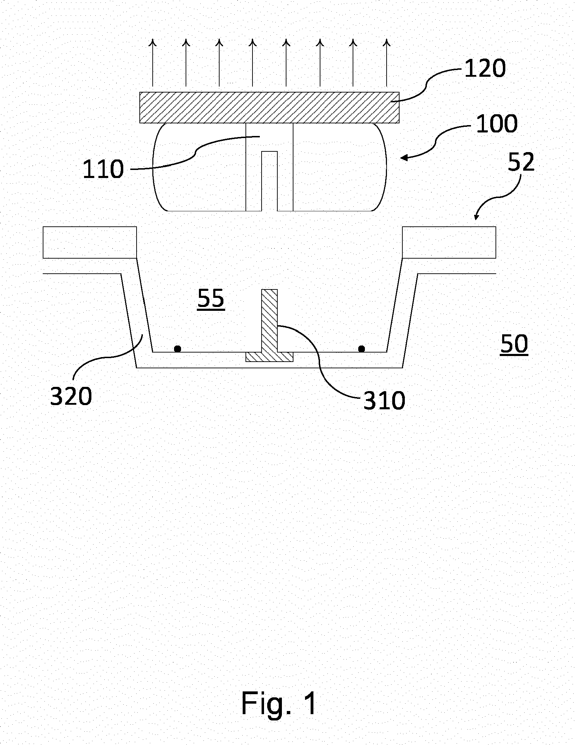

**Fig. 1** zeigt beispielhaft einen Flugdatenschreiber 100 von einem Luftfahrzeug 50, der abgeworfen werden kann. Der Flugdatenschreiber 100 ist für mehrere Typen von Luftfahrzeugen 50 nutzbar und in dem Sinne universell. Der Flugdatenschreiber 100 umfasst: Befestigungsmittel 110, um den Flugdatenschreiber 100 in einer dafür vorgesehenen Ausnehmung 55 des Luftfahrzeuges 50 zu befestigen, und Verbindungsmittel (in der Fig. 1 nicht zu sehen) zur Befestigung einer Abdeckung 120, die nach dem Befestigen des Flugdatenschreibers 100 in der Ausnehmung 55 Teil einer Au-ßenoberfläche 52 des Luftfahrzeuges 50 ist. Das Luftfahrzeug 50 kann insbesondere ein Flugzeug sein, auch wenn die Erfindung nicht auf ein bestimmtes Luftfahrzeug eingeschränkt werden soll.

Die Fig. 1 zeigt außerdem eine Befestigungsstruktur 310 für den Flugdatenschreiber 100. Die Befestigungsstruktur 310 ist in einer Kammer 320 (die die Ausnehmung 55 bildet) ausgebildet, die den Flugdatenschreiber 100 über dessen Befestigungsmittel 110 in der Kammer 320 hält. Die Abdeckung 120 des Flugdatenschreibers 100 stellt nach dem Einbau ein Teil der Außenwand 52 des Flugzeuges dar. Beispielhaft ist hier eine mittig angeordnete Einpunktaufhängung gezeigt, wobei der Flugdatenschreiber 100 beispielsweise über Treibladungen abwerfbar ist, so dass sich der Flugdatenschreiber 100 bei einer Aktivierung senkrecht vom Flugzeug weg bewegt (z.B. in Richtung der gezeigten Pfeile). Insbesondere ist kein Luftstrom erforderlich, um den Flugdatenschreiber 100 in eine bestimmte Richtung von dem Flugzeug weg zu bewegen.

Die Befestigungsstruktur 310 kann beispielsweise ein stabförmiges Befestigungselement aufweisen, das eine Aufhängung für den Flugdatenschreiber 100 bietet. Das stabförmige Befestigungselement 310 kann beispielhaft einen Kugelsperrbolzen und ein bewegliches Element umfassen, das durch eine Drehung und/oder Verschiebung den Flugdatenschreiber 100 freigibt bzw. fixiert. Die Verschiebung kann beispielsweise durch eine Treibladung verursacht werden, die ein automatisches Abwerfen des Flugdatenschreibers 100 bewirkt, wobei die Treibladung Teil der Befestigungsmittel 110 und/oder der Befestigungsstruktur 310 sein kann. Insbesondere ist wegen der Einpunktaufhängung kein definierter Luftstrom erforderlich, um den Flugdatenschreiber 100 aus der Kammer 320 herauszuschleudern (z.B. vor einem Aufprall des Flugzeuges). Die Treibladung kann beispielsweise beim Aktivieren eine Kraft ausüben, die einerseits die Befestigungsstruktur 310 von den Befestigungsmitteln 110 löst und gleichzeitig den Flugdatenschreiber 100 nach außen bewegt.

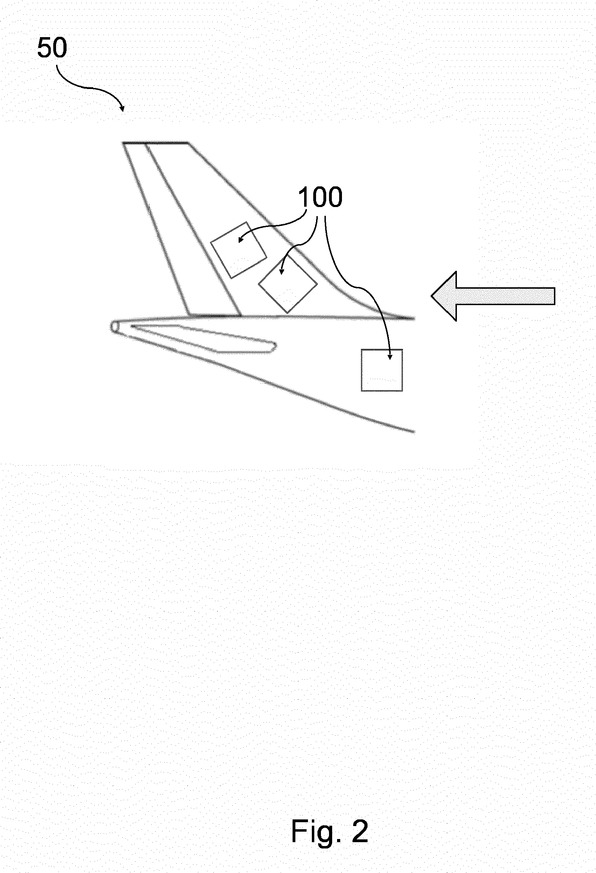

**Fig. 2** zeigt mögliche Platzierungen des Flugdatenschreibers 100 an einer Außenwand des beispielhaften Flugzeuges 50. So kann der Flugdatenschreiber 100 beispielsweise in einem der Ruder (z.B. des Leitruders) oder an einer Außenwand des Rumpfes des Flugzeuges 50 angeordnet sein. Der Flugdatenschreiber 100 wird nach dem Einsetzen in die Kammer 320 durch seine Abdeckung 120 Teil der Außenwand des Flugzeuges 50, sodass der Luftstrom (siehe Pfeil) nicht behindert wird. Die genannte Einpunktaufhängung ermöglicht außerdem, ein effektives Abwerfen des Flugdatenschreibers 200, und zwar selbst aus Positionen, die z.B. vor einem Höhenleitwerk liegen.

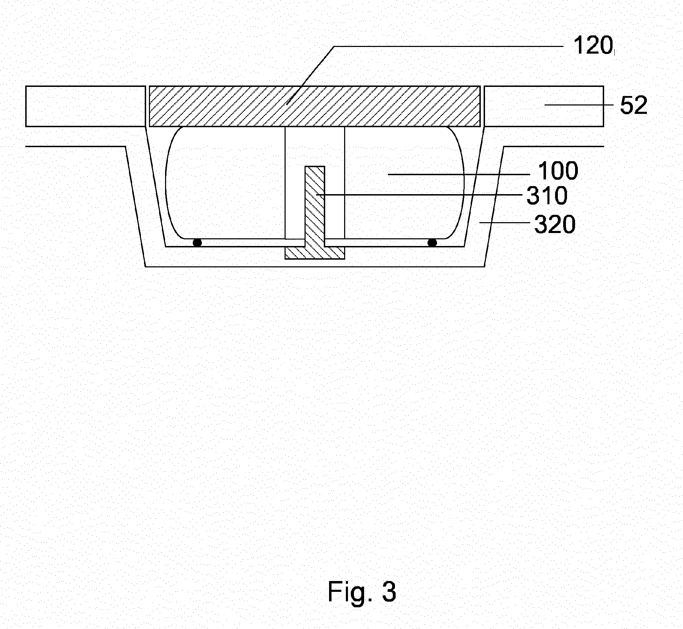

**Fig. 3** zeigt den Flugdatenschreiber 100, nachdem er in die Kammer 320 des Flugzeuges 50 eingesetzt wurde. Die Außenwand 52 des Flugzeuges 50 schließt somit nach dem Einsetzen bündig mit der Abdeckung 120 des Flugdatenschreibers 100 ab. Die Abdeckung 120 weist eine Lackierung auf, die an die Außenwand 52 des Flugzeuges angepasst ist. Der Flugdatenschreiber 100 ist wiederum mit seinen Befestigungsmittel 110 mit der Befestigungsstruktur 310 über eine beispielhafte Einpunktaufhängung an einer zentralen Position fixiert. Der Flugdatenschreiber 100 kann eine nahezu beliebige Form aufweisen und ist nur durch die Abmaße der Kammer 320 eingeschränkt, die jedoch frei gewählt werden können. Nur die Abdeckung 120 ist spezifisch für das Luftfahrzeug 50.

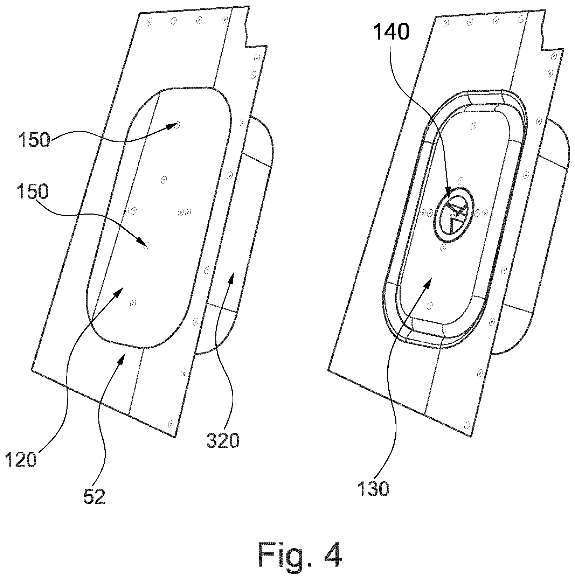

**Fig. 4** zeigt eine Raumansicht auf die Außenwand 52 der Abdeckung 120 mit einer beispielhaften Außenlackierung des Flugzeuges 50 als beispielhaftes Luftfahrzeug. Nach dem Einbau des Flugdatenschreibers 100 in die Kammer 320 bildet sich somit eine weitestgehend homogene Außenoberfläche des Flugzeuges 50. Der Flugdatenschreiber 100 umfasst ein Gehäuse 130, in dem der Flugdatenschreiber 100 untergebracht ist. Das Gehäuse 130 kann aber auch Teil des Flugdatenschreibers 100 sein. Die Abdeckung 120 des Flugdatenschreiber 100 wird über Verbindungsmittel 150 in Form von lösbaren Verbindungen (z.B. Schraubverbindungen oder dafür genutzten Bohrungen) an dem Gehäuse 130 befestigt.

Das Gehäuse 130 kann auch ein allgemeiner Behälter sein, der zur Aufbewahrung von baugleichen oder verschiedenen Flugdatenschreibern geeignet ist.

Die Befestigungsmittel 110 umfassen in dem Ausführungsbeispiel der Fig. 4 einen Arretiermechanismus 140, der z.B. mittig in dem Gehäuse 130 angeordnet ist. Wie in der Fig. 3 gezeigt, kann die zur Befestigung genutzte Befestigungsstruktur 310 beispielsweise einen Kugelsperrbolzen umfassen, der z.B. durch ein Drehen eines beweglichen Bolzens die Arretierung löst oder herstellt. Es ist ebenfalls möglich, dass die Arretierstruktur 140 den beispielhaften Kugelsperrbolzen aufweist, wobei die Arretierstruktur 140 durch ein Drehen/Verschieben fixiert oder gelöst wird, sodass das Gehäuse 130 zusammen mit den darin enthaltenen Flugdatenschreibers 100 aus der Kammer 320 entnehmbar ist.

Das Einsetzen des Flugdatenschreibers 100 kann beispielsweise derart geschehen, dass zunächst der Flugdatenschreibers 100 mit dem Gehäuse 130 in die Kammer 320 eingebracht wird, sodass der in der Kammer 320 vorhandene beispielhafte Kugelsperrbolzen mit den Befestigungsmitteln 110 in Eingriff gelangt (z.B. durch ein einfaches Aufschieben). Optional kann durch ein Drehen der vorhandenen Arretierstruktur 140 ein Befestigen mit dem Flugdatenschreiber 100 in der Kammer 320 erfolgen. Abschließend kann die Abdeckung 120 über die beispielhaften Schraubverbindungen 150 an dem Gehäuse 130 angeschraubt werden. Die Abdeckung 120 wird also nur durch den Flugdatenschreiber 100 bzw. durch das Gehäuse/Behälter 130 gehalten und bei der Aktivierung der Absprengung des Flugdatenschreibers 100 mit abgeworfen.

Ausführungsbeispiele der vorliegenden Erfindung weisen insbesondere die Vorteile auf:
Der modulare Aufbau erlaubt es, baugleiche Flugdatenschreiber 100 für mehrere Flugzeugtypen zu nutzen. Dadurch können die Kosten gesenkt werden, da die Flugdatenschreiber 100 in großer Anzahl für verschiedene Flugzeugtypen hergestellt werden können und lediglich flugzeugspezifische Abdeckungen 120 zu fertigen sind. Somit ist es möglich, die Flugdatenschreiber 100 regelmäßig zu Wartungs- oder Überprüfungszwecken zu tauschen, wobei nur der Flugdatenschreiber 100 ausgetauscht wird und die Abdeckung 120 am Flugzeug 50 verbleibt bzw. mit einem Austauschteil verbunden wird.

Ausführungsbeispielen sind insbesondere für abwerfbare Flugdatenschreiber 100 gut geeignet, da der Flugdatenschreiber 100 mit der Abdeckung 120 (Klappe) eine Kammer 320 in einer Ausnehmung (Öffnung) 55 des Luftfahrzeuges bündig verschließt. Der Flugdatenschreiber 100 mit der Abdeckung 120 wird somit Teil der Außenoberfläche 52 des Flugzeuges 50 und kann leicht nach außer abgesprengt werden. Eine Einpunktaufhängung erlaubt weitestgehende Freiheit, da der Luftstrom zum Aktivieren des Abwurfprozesses nicht erforderlich ist.

Andererseits braucht der Flugdatenschreiber 100 selber nicht flugzeugspezifisch sein, sondern kann als ein Standardbauteil für mehrere Flugzeugtypen ohne größere Änderungen eingesetzt werden. Neben der Abdeckung 120 ist nur die Kammer 320 an das entsprechende Luftfahrzeug und die umliegende Struktur angepasst. Die Abdeckung 120 kann flugzeugspezifisch lackiert werden, während der Flugdatenschreiber 100 universell gefertigt wird. In einem Wartungsfall kann der Flugdatenschreiber 100 leicht getauscht werden kann, während die Abdeckung 120an dem Flugzeug 50 verbleibt. Im Gegensatz hierzu sind konventionelle abwerfbare Flugdatenschreiber derart verbaut, dass sie zum Aktvieren einen bestimmten Luftstrom brauchen.

### Bezugszeichenliste

- 50: Luftfahrzeug
- 52: Außenoberfläche
- 55: Ausnehmung
- 100: Flugdatenschreiber
- 110: Befestigungsmittel
- 120: Abdeckung
- 130: Gehäuse
- 150: Verbindungsmittel
- 310: Befestigungsstruktur
- 320: Kammer

## Patentansprüche

1. Universeller Flugdatenschreiber (100) mit:
Befestigungsmittel (110), um den Flugdatenschreiber (100) in einer dafür vorgesehenen Ausnehmung (55) des Luftfahrzeuges (50) zu befestigen;
Verbindungsmittel (150) zur Befestigung einer Abdeckung (120), die nach dem Befestigen des Flugdatenschreibers (100) in der Ausnehmung (55) Teil einer Außenoberfläche (52) des Luftfahrzeuges (50) ist, wobei die Abdeckung (120) spezifisch für das Luftfahrzeug (50) ist und auf einer Seite eine Außenlackierung des Luftfahrzeuges (50) aufweist;
ein Gehäuse (130), das die Befestigungsmittel (110) und die Verbindungsmittel (150) aufweist, um daran die Abdeckung (120) zu befestigen, wobei nur das Gehäuse (130) die Abdeckung (120) hält;
**gekennzeichnet dadurch, dass**
die Verbindungsmittel (150) lösbare Verbindungen sind.

2. Flugdatenschreiber (100) nach Anspruch 1, wobei innerhalb der Ausnehmung (55) des Luftfahrzeuges (50) eine Einpunktaufhängung (310) vorgesehen ist und die Befestigungsmittel (110) ausgebildet sind, um die Einpunktaufhängung (310) beim Einsetzen des Flugdatenschreibers (100) in die Ausnehmung (55) in Eingriff zu nehmen, um den Flugdatenschreiber (100) daran zu halten.

3. Flugdatenschreiber (100) nach Anspruch2,
wobei die Einpunktaufhängung (310) ein stabförmiges Befestigungselement aufweist,
und wobei die Befestigungsmittel (110) einen drehbaren Arretiermechanismus (140) aufweisen, der im eingebauten Zustand der Abdeckung (120) zugewandt ist und ausgebildet ist, um über eine Drehung eine Verbindung mit dem stabförmigen Befestigungselement (310) herzustellen oder zu lösen, um so das Gehäuse (130) in der Ausnehmung (55) zu halten oder zu lösen.

4. Flugdatenschreiber (100) nach einem der vorhergehenden Ansprüchen, der weiter einen Abwerfmechanismus, insbesondere eine Treibladung, aufweist, um einen Abwurf des Flugdatenschreibers (100) zu ermöglichen.

5. Flugdatenschreiber (100) nach einem der vorhergehenden Ansprüchen, der weiter Folgendes umfasst:
eine Kammer (320), die die Ausnehmung (55) an der Außenoberfläche (52) des Luftfahrzeuges (50) bildet; und
eine Befestigungsstruktur (310), die ausgebildet ist, um die Befestigungsmittel (110) des Flugdatenschreibers (100) in Eingriff zu nehmen, um den Flugdatenschreiber (100) zu halten.

6. Flugdatenschreiber (100) nach Anspruch 5, wobei die Befestigungsstruktur (310) eine Einpunktaufhängung definiert und insbesondere ein zentral angeordnetes stabförmiges Befestigungselement aufweist, um den Flugdatenschreiber (100) mittels der Einpunktaufhängung zu halten.

7. Ruderteil oder Rumpfteil eines Flugzeuges mit: einem Flugdatenschreiber (100) nach einem der Ansprüche 1 bis 6.

8. Luftfahrzeug (50), insbesondere Flugzeug, mit einem Flugdatenschreiber (100) nach einem der Ansprüche 1 bis 6.

9. Verfahren zum Einbau eines Flugdatenschreibers in ein Luftfahrzeug (50) mit den folgenden Schritten:
Bereitstellen eines universellen Flugdatenschreibers (100) mit einem Gehäuse (130), das Befestigungsmittel (110) und Verbindungsmittel (150) aufweist, um daran einer Abdeckung (120) zu befestigen;
Befestigen mittels der Befestigungsmittel (110) des universellen Flugdatenschreibers (100) in einer Ausnehmung (55) des Luftfahrzeuges (50);
Anbringen der Abdeckung (120), die spezifisch für das Luftfahrzeug (50) ist und auf einer Seite eine Außenlackierung des Luftfahrzeuges (50) aufweist, an den Flugdatenschreiber (100) mittels der Verbindungsmittel (150), so dass die Abdeckung (120) Teil einer Außenoberfläche des Luftfahrzeuges (50) wird, wobei nur das Gehäuse (130) die Abdeckung (120) hält;
**gekennzeichnet dadurch, dass**
die Verbindungsmittel (150) lösbare Verbindungen sind.

10. Verfahren nach Anspruch 9, wobei der Flugdatenschreiber (100) in ein Ruderteil oder einen Rumpfteil des Luftfahrzeuges (50) eingesetzt wird.

## Claims

1. Universal flight data recorder (100) comprising:
fastening means (110) to fasten the flight data recorder (100) in a recess (55) of the aircraft (50), which recess is provided for this purpose;
connecting means (150) for fastening a cover (120), which is part of an outer surface (52) of the aircraft (50) after the flight data recorder (100) has been fastened in the recess (55), the cover (120) being specific to the aircraft (50) and having an exterior coating of the aircraft (50) on one face;
a housing (130) which has the fastening means (110) and the connecting means (150) to fasten the cover (120) thereon, only the housing (130) holding the cover (120);
**characterized in that**
the connecting means (150) are releasable connections.

2. Flight data recorder (100) according to claim 1, wherein a single point suspension (310) is provided within the recess (55) of the aircraft (50) and the fastening means (110) are designed to engage the single point suspension (310) when the flight data recorder (100) is inserted in the recess (55) in order to hold the flight data recorder (100) thereon.

3. Flight data recorder (100) according to claim 2,
wherein the single point suspension (310) has a rod-shaped fastening element,
and wherein the fastening means (110) have a rotatable locking mechanism (140) which faces the cover (120) in the installed state and is designed to establish or release a connection with the rod-shaped fastening element (310) via a rotation in order to thus hold or release the housing (130) in the recess (55).

4. Flight data recorder (100) according to any of the preceding claims, further comprising a discarding mechanism, in particular a propellant charge, in order to allow a discharge of the flight data recorder (100).

5. Flight data recorder (100) according to any of the preceding claims, further comprising:
a chamber (320) which forms the recess (55) on the outer surface (52) of the aircraft (50); and
a fastening structure (310) which is designed to engage the fastening means (110) of the flight data recorder (100) in order to hold the flight data recorder (100).

6. Flight data recorder (100) according to claim 5, wherein the fastening structure (310) defines a single point suspension and in particular has a centrally arranged rod-shaped fastening element in order to hold the flight data recorder (100) by means of the single point suspension.

7. Rudder part or fuselage part of an airplane, comprising:
a flight data recorder (100) according to any of claims 1 to 6.

8. Aircraft (50), in particular an airplane, comprising
a flight data recorder (100) according to any of claims 1 to 6.

9. Method for installing a flight data recorder in an aircraft (50), comprising the following steps:
providing a universal flight data recorder (100) having a housing (130) which has fastening means (110) and connecting means (150) to fasten to a cover (120);
fastening, by means of the fastening means (110), the universal flight data recorder (100) in a recess (55) of the aircraft (50);
attaching the cover (120), which is specific to the aircraft (50) and has an exterior coating of the aircraft (50) on one face, to the flight data recorder (100) by means of the connecting means (150), such that the cover (120) becomes part of an outer surface of the aircraft (50), only the housing (130) holding the cover (120);
**characterized in that**
the connecting means (150) are releasable connections.

10. Method according to claim 9, wherein the flight data recorder (100) is inserted into a rudder part or a fuselage part of the aircraft (50).

## Revendications

1. Enregistreur de données de vol (100) universel comportant :
des moyens de fixation (110) pour fixer l'enregistreur de données de vol (100) dans un évidement (55) de l'aéronef (50) prévu à cet effet ;
des moyens de liaison (150) pour la fixation d'un couvercle (120) qui fait partie d'une surface extérieure (52) de l'aéronef (50) après la fixation de l'enregistreur de données de vol (100) dans l'évidement (55), dans lequel le couvercle (120) est spécifique à l'aéronef (50) et présente sur une face une peinture extérieure de l'aéronef (50) ;
un boîtier (130) qui présente les moyens de fixation (110) et les moyens de liaison (150) pour fixer le couvercle (120) sur celui-ci, dans lequel seul le boîtier (130) maintient le couvercle (120) ;
**caractérisé en ce que**
les moyens de liaison (150) sont des liaisons détachables.

2. Enregistreur de données de vol (100) selon la revendication 1, dans lequel une suspension à un point (310) est prévue à l'intérieur de l'évidement (55) de l'aéronef (50) et les moyens de fixation (110) sont conçus pour venir en prise avec la suspension à un point (310) lors de l'insertion de l'enregistreur de données de vol (100) dans l'évidement (55) afin d'y maintenir l'enregistreur de données de vol (100).

3. Enregistreur de données de vol (100) selon la revendication 2,
dans lequel la suspension à un point (310) présente un élément de fixation en forme de tige,
et dans lequel les moyens de fixation (110) présentent un mécanisme de blocage rotatif (140) faisant face au couvercle (120) à l'état installé et conçu pour établir ou pour libérer une liaison à l'élément de fixation en forme de tige (310) par l'intermédiaire d'une rotation, afin de maintenir le boîtier (130) dans l'évidement (55) ou de le libérer de celui-ci.

4. Enregistreur de données de vol (100) selon l'une des revendications précédentes, lequel présente en outre un mécanisme d'éjection, en particulier une charge propulsive, pour permettre une éjection de l'enregistreur de données de vol (100).

5. Enregistreur de données de vol (100) selon l'une des revendications précédentes, lequel comprend en outre les éléments suivants :
une chambre (320) qui forme l'évidement (55) sur la surface extérieure (52) de l'aéronef (50) ; et
une structure de fixation (310) qui est conçue pour venir en prise avec les moyens de fixation (110) de l'enregistreur de données de vol (100) afin de maintenir l'enregistreur de données de vol (100).

6. Enregistreur de données de vol (100) selon la revendication 5, dans lequel la structure de fixation (310) définit une suspension à un point et présente en particulier un élément de fixation en forme de tige disposé au centre pour maintenir l'enregistreur de données de vol (100) au moyen de la suspension à un point.

7. Partie de gouverne ou partie de fuselage d'un avion comportant :
un enregistreur de données de vol (100) selon l'une des revendications 1 à 6.

8. Aéronef (50), en particulier avion, comportant
un enregistreur de données de vol (100) selon l'une des revendications 1 à 6.

9. Procédé permettant l'installation d'un enregistreur de données de vol dans un aéronef (50) comportant les étapes suivantes :
fourniture d'un enregistreur de données de vol (100) universel comportant un boîtier (130) qui présente des moyens de fixation (110) et des moyens de liaison (150) pour fixer un couvercle (120) sur celui-ci ;
fixation, au moyen des moyens de fixation (110), de l'enregistreur de données de vol (100) universel dans un évidement (55) de l'aéronef (50) ;
pose du couvercle (120), lequel est spécifique à l'aéronef (50) et présente sur une face une peinture extérieure de l'aéronef (50), sur l'enregistreur de données de vol (100) au moyen des moyens de liaison (150), de sorte que le couvercle (120) fait partie d'une surface extérieure de l'aéronef (50), dans lequel seul le boîtier (130) maintient le couvercle (120) ;
**caractérisé en ce que**
les moyens de liaison (150) sont des liaisons détachables.

10. Procédé selon la revendication 9, dans lequel l'enregistreur de données de vol (100) est inséré dans une partie de gouverne ou une partie de fuselage de l'aéronef (50).
